# EUROPÄISCHE PATENTSCHRIFT

(11) **EP 2 895 925 B1**
(45) Veröffentlichungstag und Bekanntmachung des Hinweises auf die Patenterteilung: **28.09.2016**
(21) Anmeldenummer: 12790458.9
(22) Anmeldetag: 06.11.2012
(51) Int. Cl.: G05B 19/418

(54) **KASKADIERTES FELDBUSSYSTEM**
CASCADED FIELDBUS SYSTEM
SYSTÈME DE BUS DE TERRAIN EN CASCADE

(43) Veröffentlichungstag der Anmeldung: 22.07.2015
(73) Patentinhaber: Siemens Aktiengesellschaft, 80333 München (DE)
(72) Erfinder: GREINER-JACOB, Ralf, 91349 Egloffstein (DE); SEEBURG, Harald, 92289 Ursensollen (DE)
(86) Internationale Anmeldenummer: PCT/EP2012/071936
(87) Internationale Veröffentlichungsnummer: WO 2014/071970

(56) Entgegenhaltungen:
- DE-A1- 19 739 297
- US-A1- 2008 313 254
- "CANopen Integration in PROFINET IO - Amendment 7 to Fieldbus Integration into PROFINET IO - Version 1.0", , Mai 2011 (2011-05), XP055068008, Gefunden im Internet: URL:http://www.felser.ch/download/index.ht m?7__profinet.htm [gefunden am 2013-06-24]
- "Fieldbus integration in PROFINET IO, Version 2.0", , Mai 2011 (2011-05), XP055068005, Gefunden im Internet: URL:http://www.felser.ch/download/index.ht m?7__profinet.htm [gefunden am 2013-06-24] in der Anmeldung erwähnt
- JASPERNEITE J ET AL: "PROFINET: An Integration Platform for heterogeneous Industrial Communication Systems", 10TH IEEE INTERNATIONAL CONFERENCE ON EMERGING TECHOLOGIES AND FACTORY AUTOMATION, IEEE, PISCATAWAY, NJ, USA, Bd. 1, 19. September 2005 (2005-09-19), Seiten 815-822, XP010905415, DOI: 10.1109/ETFA.2005.1612610 ISBN: 978-0-7803-9401-8

## Beschreibung

Die Erfindung bezieht sich auf ein kaskadiertes Feldbussystem. Als kaskadiertes Feldbussystem wird eine Einrichtung mit mehreren kommunikationstechnisch miteinander verschalteten Feldbussen bezeichnet, die in einer durch bestimmte Überordnungs- bzw. Unterordnungsverhältnisse definierten Hierarchie stehen. Diese Hierarchie ist auch als "Kaskade" bezeichnet.

Feldbusse werden im industriellen Bereich zur Kommunikation, d.h. zum Befehls- und Datenaustausch zwischen mehreren Busgeräten verwendet. Bei den Busgeräten eines Feldbusses handelt es sich typischerweise um mindestens ein Steuergerät sowie mindestens ein zu steuerndes Gerät, insbesondere einen Sensor und/oder Aktor. Ein Feldbus umfasst eine drahtgebundene oder drahtlose Datenübertragungsstrecke eines spezifizierten Typs, insbesondere eine bestimmte Kupfer- oder Glasfaserleitung, über die alle Busgeräte des Feldbusses in einer vorgegebenen Topologie (z.B. Ringtopologie, Sterntopologie, Linientopologie oder Baumtopologie) miteinander zum Befehls- und Datenaustausch verbunden sind. Ein Feldbus umfasst des Weiteren üblicherweise eine Anzahl von Busschnittstellen, wobei jedem der Busgeräte jeweils eine Busschnittstelle zugeordnet ist. Jedem Feldbus unterliegt ein standardisiertes und in den Busschnittstellen implementiertes Protokoll, gemäß dem die Busgeräte miteinander kommunizieren.

Um eine zielgerichtete Kommunikation zwischen zwei bestimmten Busgeräten oder einer größeren Untergruppe der Busgeräte zu ermöglichen, ist bei einem Feldbus üblicherweise jedem Busgerät eine eindeutige Adresse zugewiesen. Die Adressierung der Busgeräte dient darüber hinaus häufig auch zur Regelung des Buszugriffs. Die Busgeräte eines Feldbusses stehen hierbei zueinander meistens in einer Master/Slave-Konfiguration, wobei zumindest ein Busgerät als "Master" von sich aus auf die Busleitung zugreifen kann und den übrigen Busgeräten ("Slaves") Daten übermittelt bzw. Daten dieser übrigen Busgeräte einliest.

Die Kommunikation moderner Feldbus-Standards beruht häufig auf dem Ethernet-Standard. Solche Feldbusse werden auch als "Industrial Ethernet", "Echtzeit-Ethernet" oder als "Feldbusse der zweiten Generation" bezeichnet. Verbreitete Feldbus-Standards der zweiten Generation sind insbesondere Profinet, Ethernet/IP (EIP), EtherCAT, etc.

Feldbusse, deren Kommunikation nicht auf dem Ethernet-Standard beruht, werden dagegen als "Feldbusse der ersten Generation" bezeichnet. Verbreitete Feldbus-Standards der ersten Generation sind insbesondere Profibus, CAN, CANopen, Interbus, etc.

Busgeräte moderner Feldbusse sind des Weiteren häufig modular aufgebaut. Solche Busgeräte weisen mehrere separat adressierbare Steckplätze (Slots) auf, die wahlweise mit Steckkarten-Modulen unterschiedlicher Funktion belegt werden können.

In industriellen Anlagen wie zum Beispiel Fertigungsanlagen und Kraftwerken können Feldbusse eine hohe Komplexität aufweisen. Hierbei kann es - beispielsweise im Zuge einer Erweiterung bestehender Anlagen oder der Integration von Teilanlagen verschiedener Hersteller - notwendig oder zumindest wirtschaftlich sinnvoll sein, mehrere verschiedene Feldbusse zu einem Feldbussystem zusammenzuschalten. Ein solches Feldbussystem ist häufig kaskadiert aufgebaut. Es umfasst demnach einen übergeordneten Feldbus (Feldbus erster Ordnung), von dem aus mindestens ein direkt untergeordneter Feldbus (Feldbus zweiter Ordnung) angesteuert wird. Dem oder jedem Feldbus zweiter Ordnung können wiederum ein oder mehrere weitere Feldbusse (Feldbus n-ter Ordnung; n=3,4,5,...) unmittelbar oder mittelbar untergeordnet sein.

Nachteiligerweise ist die Programmierung eines solchen kaskadierten Bussystems allerdings häufig hochkomplex, zumal die Busgeräte der untergeordneten Feldbusse für den Feldbus erster Ordnung und dessen Steuergerät nicht sichtbar sind. Dies hat regelmäßig zur Folge, dass jeder Feldbus isoliert für sich programmiert werden muss. Eine zentrale Steuerung der Busgeräte der untergeordneten Feldbusse über den Feldbus erster Ordnung kann in der Regel nur bei genauer Kenntnis aller untergeordneten Feldbusse etabliert werden.

Zur Vereinfachung der Projektierung komplexer Feldbussysteme sind bei dem Feldbus-Standard "Profinet IO" sogenannte Feldbuszugangsknoten (FAP - Fieldbus Access Point) vorgesehen, über die weitere Feldbusse angeschlossen werden können. Jeder Feldbuszugangsknoten spannt hierbei ein sogenanntes Slot-Cluster auf. Ein solches Slot-Cluster enthält eine Anzahl von virtuellen Steckplätzen, denen Busgeräte des untergeordneten Busses zugeordnet werden können. Durch diese Zuordnung werden die Busgeräte des untergeordneten Busses als virtuelle Module des Profinet-Busses abgebildet. Sie werden also im Kommunikations- und Adressschema des Profinet-Busses so dargestellt, als würde es sich bei diesen Busgeräten um physische Module des Profinet-Busses handeln. Insbesondere sind die Busgeräte des untergeordneten Feldbusses über das zugeordnete virtuelle Modul auch direkt aus dem Profinet-Bus adressierbar und ansprechbar. Dieses Konzept zur Integration von untergeordneten Feldbussen ist insbesondere in der Richtlinie (Guideline) "Fieldbus Integration in PROFINET IO", Version 2.0 (Mai 2011), Nr.: 7.012, PROFIBUS Nutzerorganisation e.V., Karlsruhe (Deutschland) beschrieben.

Das vorstehend beschriebene Konzept ist allerdings lediglich auf Feldbusse anwendbar, die einem Profinet-Bus als Feldbusse zweiter Ordnung direkt untergeordnet sind. Nicht abbildbar sind dagegen die Busgeräte von Feldbussen dritter Ordnung, vierter Ordnung, etc., die nur mittelbar an den Profinet-Bus angeschlossen sind.

Ein weiteres Konzept zur Integration von untergeordneten Feldbussen ist aus der Richtlinie "CANopen Integration in PROFINET IO, Amendment 7 to Fieldbus Integration into PROFINET IO", Version 1.0 vom März 2011 bekannt.

Der Erfindung liegt die Aufgabe zugrunde, die Projektierung eines kaskadierten Feldbussystems mit mindestens drei Ordnungen (Kaskadenstufen), also mindestens drei in einer Hierarchie stehenden Feldbussen zu vereinfachen.

Bezüglich eines Verfahrens zur Projektion eines kaskadierten Feldbussystems wird diese Aufgabe erfindungsgemäß gelöst durch die Merkmale des Anspruchs 1. Bezüglich eines kaskadierten Feldbussystems wird die Aufgabe erfindungsgemäß gelöst durch die Merkmale des Anspruchs 5. Bezüglich eines Feldbusmoduls oder Feldbusgeräts wird die Aufgabe erfindungsgemäß gelöst durch die Merkmale des Anspruchs 9 bzw. die Merkmale des Anspruchs 10. Vorteilhafte und teils für sich gesehen erfinderische Ausgestaltungsformen und Weiterentwicklungen der Erfindung sind in den Unteransprüchen und der nachfolgenden Beschreibung dargelegt.

Die Erfindung geht aus von einem bestehenden oder aufzubauenden Feldbussystem, das eine mindestens dreistufige Hierarchie, also drei Kaskadenstufungen oder Ordnungen von Feldbussen umfasst. Zuoberst umfasst dieses Feldbussystem einen ersten Feldbus (Feldbus erster Ordnung). Diesem ersten Feldbus ist mindestens ein zweiter Feldbus (Feldbus zweiter Ordnung) untergeordnet. Diesem zweiten Feldbus ist wiederum mindestens ein dritter Feldbus (Feldbus dritter Ordnung) untergeordnet. Das Feldbussystem kann hierbei baumartig verzweigt sein, d.h. mehrere Feldbusse der zweiten Ordnung und/oder mehrere Feldbusse der dritten Ordnung umfassen.

Jeder der Feldbusse umfasst eine Mehrzahl von Busgeräten, die im Folgenden - entsprechend ihrer Zugehörigkeit zu dem ersten, zweiten oder dritten Feldbus - als erste, zweite bzw. dritte Busgeräte bezeichnet sind. Bei einem Busgerät kann es sich insbesondere um ein einzelnes Steuergerät, einen einzelnen Sensor oder Befehlsgeber, einen einzelnen Aktor oder um eine Kombination mehrerer dieser Gerätetypen handeln. Ebenso kann es sich bei jedem Busgerät um ein Kompaktgerät mit - zumindest hardwaretechnisch - unveränderlicher Funktionalität oder um ein modulares Gerät handeln. In letzterem Fall umfasst das Busgerät mehrere (physische) Steckplätze, die mit (Hardware-)Modulen gleicher oder unterschiedlicher Funktion belegt werden können. Diese (Hardware-)Module liegen insbesondere in Form von elektronischen Steckkarten vor. Zusätzlich oder alternativ zu den vorstehend beschriebenen (Hardware-) Modulen kann ein Busgerät mehrere voneinander abgegrenzte Software-Module mit jeweils spezifischer Funktion enthalten. Jedes (Hardware- oder Software-)Modul kann dabei optional wiederum aus einem oder mehreren (Unter-)Modulen zusammengesetzt sein, die wiederum modular aufgebaut sein können.

Für die Projektion des kaskadierten Feldbussystems wird erfindungsgemäß der oder jeder zweite Feldbus über ein Feldbuszugangsknotengerät (FAP-Gerät) an den ersten Feldbus angebunden. Das FAP-Gerät bildet hierbei die Geräte des zweiten Feldbusses als virtuelle Module des ersten Feldbusses ab.

Bei dem FAP-Gerät kann es sich im Rahmen der Erfindung wahlweise um ein - hardwaretechnisch unveränderliches - Kompaktgerät handeln oder um ein modulares Busgerät. In letzterem Fall enthält das FAP-Gerät mindestens ein FAP-Modul, in dem die vorstehend beschriebene Funktionalität implementiert ist..

Darüber hinausgehend ist im Zuge des erfindungsgemäßen Verfahrens vorgesehen, dass ein (nachfolgend als "Verbindungsgerät" bezeichnetes) Busgerät, über das der dritte Feldbus an den zweiten Feldbus angeschlossen wird, als virtuelles Feldbuszugangsknotenmodul (virtuelles FAP-Modul) des ersten Feldbusses abgebildet wird. Dieses virtuelle FAP-Modul bildet hierbei die übrigen Geräte des dritten Feldbusses als virtuelle Module des ersten Feldbusses ab.

Die vorstehend beschriebene Abbildung der Busgeräte der untergeordneten Feldbusse als virtuelle Module des ersten Feldbusses ist nachfolgend auch als "Linearisierung" des kaskadierten Bussystems bezeichnet.

Die erfindungsgemäße Linearisierung hat zur Folge, dass sich alle Busgeräte der untergeordneten Feldbusse im Feldbus erster Ordnung wie Module dieses Feldbusses verhalten. Insbesondere können somit alle Busgeräte und Module des kaskadierten Feldbussystems direkt über den Feldbus erster Ordnung adressiert und angesprochen werden und erben - sofern es der technische Standard des jeweils untergeordneten Feldbusses zulässt - alle Funktionalitäten, die das FAP-Gerät bzw. FAP-Modul des Feldbusses erster Ordnung zur Verfügung stellt.

Insbesondere wird vorzugsweise auch eine gegebenenfalls vorhandende modulare Struktur der Busgeräte der untergeordneten Feldbusse mit abgebildet, indem Module eines jeden solchen Busgeräts auf Untermodule des jeweils zugeordneten virtuellen Moduls abgebildet werden.

Vorzugsweise handelt es sich bei dem Feldbus erster Ordnung um einen Feldbus der zweiten Generation, insbesondere um einen auf dem "Profinet IO"-Standard beruhenden Feldbus. Die untergeordneten Feldbusse können grundsätzlich auf einem beliebigen Feldbus-Standard beruhen. Zweckmäßigerweise handelt es sich aber bei zumindest einem dieser untergeordneten Feldbusse, insbesondere bei dem Feldbus dritter Ordnung, um einen Feldbus der ersten Generation, insbesondere um einen Profibus, CAN-Bus oder Interbus. Die erfindungsgemäße Linearisierung aller Busgeräte des kaskadierten Feldbussystems hat hierbei den Vorteil, dass auch die untergeordneten Feldbusse einheitlich mit den - oft höher entwickelten und einfacher handhabbaren - Funktionalitäten des Feldbusses erster Ordnung angesprochen werden können.

Vorzugsweise wird das erfindungsgemäße Prinzip der Linearisierung der untergeordneten Feldbusse auf beliebig tief kaskadierte Feldbussysteme, d.h. auf Feldbussysteme mit beliebig vielen Ordnungen von untergeordneten Feldbussen, angewendet. In diesem Sinne wird von einem Feldbussystem ausgegangen, das zusätzlich zu den vorstehend genannten (ersten bis dritten) Feldbussen mindestens einen weiteren Feldbus n-ter Ordnung (mit n=4, 5, 6,...) aufweist, der dem dritten Feldbus wiederum unmittelbar oder mittelbar untergeordnet ist, und der über ein Verbindungsgerät unmittelbar oder mittelbar an den dritten Feldbus angeschlossen ist. Im Sinne der erfindungsgemäßen Linearisierung des Feldbussystems ist hierbei vorgesehen, dass auch das den weiteren Feldbus n-ter Ordnung mit dem nächst übergeordneten Feldbus verbindende Verbindungsgerät als virtuelles FAP-Modul des ersten Feldbusses abgebildet wird, so dass die übrigen (d.h. zusätzlich zu dem Verbindungsgerät vorhandenen) Busgeräte des weiteren Feldbusses n-ter Ordnung als virtuelle Module des ersten Feldbusses abgebildet werden.

Das erfindungsgemäße Feldbusmodul oder Feldbusgerät ist allgemein zur automatischen Durchführung des vorstehend beschriebenen Verfahrens eingerichtet. Insbesondere ist dieses Feldbusmodul bzw. -gerät dabei dazu eingerichtet, Busgeräte des zweiten Feldbusses als virtuelle Module des ersten Feldbusses abzubilden.

Das erfindungsgemäße Feldbusmodul bzw. -gerät ist zusätzlich dazu eingerichtet, ein Verbindungsgerät, über das ein dritter Feldbus an den zweiten Feldbus anschließbar ist, als virtuelles FAP-Modul des ersten Feldbusses abzubilden und die übrigen Busgeräte des dritten Feldbusses als virtuelle Module des ersten Feldbusses abzubilden. Optional ist das erfindungsgemäße Feldbusmodul darüber hinaus auch zur Linearisierung von Feldbussen n-ter Ordnung (mit n=4,5,6,...) eingerichtet.

Bei dem erfindungsgemäßen Feldbusmodul bzw. -gerät handelt es sich insbesondere um ein FAP-Modul bzw. FAP-Gerät, über das ein Feldbus zweiter Ordnung an den Feldbus erster Ordnung anschließbar ist.

Anliegend wird ein Ausführungsbeispiel der Erfindung anhand einer Zeichnung näher erläutert. Darin zeigen:
- FIG 1: in einem schematisch vereinfachten Blockschaltbild ein kaskadiertes Feldbussystem mit einem Feldbus erster Ordnung, mit zwei Feldbussen zweiter Ordnung, die über ein Feldbuszugangsknotenmodul (FAP-Modul) an den Feldbus erster Ordnung angeschlossen sind, sowie mit einem Feldbus dritter Ordnung, der über ein Verbindungsgerät an einen der Feldbusse zweiter Ordnung angeschlossen ist,
- FIG 2: in detaillierterer Darstellung ein das FAP-Modul enthaltendes Busgerät des Feldbusses erster Ordnung mit den daran angeschlossen Feldbussen zweiter und dritter Ordnung.

Einander entsprechende Teile, Größen und Strukturen sind in allen Figuren stets mit gleichen Bezugszeichen versehen.

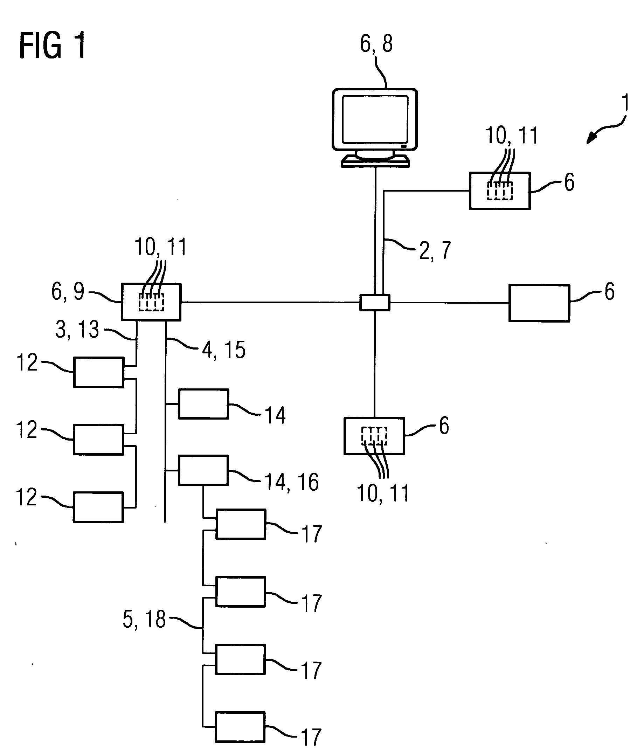

FIG 1 zeigt ein kaskadiertes Feldbussystem 1. Das Feldbussystem 1 umfasst einen Feldbus erster Ordnung, der nachfolgend als Feldbus 2 bezeichnet, zwei Feldbusse zweiter Ordnung, die nachfolgend Feldbus 3 bzw. Feldbus 4 bezeichnet sind, sowie einen Feldbus dritter Ordnung, der nachfolgend als Feldbus 5 bezeichnet ist.

Der übergeordnete Feldbus 2 beruht insbesondere auf dem "Profinet IO"-Standard. Bei den untergeordneten Feldbussen 3 bis 5 handelt es sich insbesondere um - gleichartige oder unterschiedliche - Feldbusse der ersten Generation. So beruhen beispielsweise der Feldbus 3 auf dem CAN-Standard, der Feldbus 4 auf dem Profibus-Standard und der Feldbus 5 auf dem Interbus-Standard.

Der Feldbus 2 umfasst mehrere Busgeräte 6, die über eine gemeinsame Busleitung 7 miteinander verschaltet sind. Bei dem auf Ethernet-Übertragungstechnik beruhenden Feldbus 2 handelt es sich bei der Busleitung 7 in der Regel um ein Netz von verschalteten Einzelleitungen, wobei die Datenübermittlung in dem oder jeden Netzknoten durch einen "Hub" oder "Switch" vermittelt wird. Bei mindestens einem der Busgeräte 6 handelt es sich hierbei um ein Steuergerät 8 (Controller), das im Feldbus 2 als Master betrieben wird. Des Weiteren handelt es sich bei mindestens einem der Busgeräte 6 um ein FAP-Gerät 9, über das die Feldbusse 3 und 4 unmittelbar mit dem Feldbus 2 verbunden sind. Im Feldbus 2 wird das FAP-Gerät 9 als Slave betrieben. Somit wird insbesondere der Zugriff des FAP-Geräts 9 auf den Feldbus 2 von dem Steuergerät 8 gesteuert. Im Rahmen der untergeordneten Feldbusse 3 und 4 wird das FAP-Gerät 9 dagegen vorzugsweise jeweils als Master betrieben.

Bei den übrigen Busgeräten 6 handelt es sich zumindest überwiegend um Ein-/Ausgabegeräte, die insbesondere Sensoren und/oder Aktoren umfassen, und die im Rahmen des Feldbusses 2 als Slave betrieben werden. Grundsätzlich kann der Feldbus 2 neben dem Steuergerät 8 allerdings mindestens ein weiteres Steuergerät umfassen, das ebenfalls als Master im Feldbus 2 betrieben wird.

Eines oder mehrere der Busgeräte 6 sind vorzugsweise modular aufgebaut. In diesem Fall umfasst das betreffende Busgerät 6 - wie in FIG 1 angedeutet - eine Anzahl von (physischen) Steckplätzen 10, die mit Modulen 11 in Form von Steckkarten belegt werden können.

Der Feldbus 3 weist zusätzlich zu dem FAP-Gerät 9 eine Anzahl von Busgeräten 12 auf, wobei die Busgeräte 12 über eine gemeinsame Busleitung 13 untereinander sowie mit dem FAP-Gerät 9 verschaltet sind.

Ebenso weist auch der Feldbus 4 zusätzlich zu dem FAP-Gerät 9 eine Anzahl von Busgeräten 14 auf, wobei diese Geräte 14 über eine gemeinsame Busleitung 15 untereinander sowie mit dem FAP-Gerät 9 verschaltet sind. Bei den Busgeräten 12 und 14 handelt es sich zumindest überwiegend um Ein-/Ausgabegeräte, die Aktoren und/oder Sensoren umfassen, und die in dem jeweiligen Feldbus 3 bzw. 4 als Slaves betrieben werden. Bei einem der Busgeräte 14 des Feldbusses 4 handelt es sich abweichend hiervon um ein Verbindungsgerät 16 (Adaptergerät), über das der Feldbus 5 an den Feldbus 4 angeschlossen ist. Das Verbindungsgerät 16 wird hierbei im Feldbus 4 als Slave, im Feldbus 5 dagegen als Master betrieben.

Zusätzlich zu dem Verbindungsgerät 16 umfasst der Feldbus 5 eine Anzahl von weiteren Busgeräten 17, wobei diese Busgeräte 17 über eine gemeinsame Busleitung 18 untereinander sowie mit dem Verbindungsgerät 16 verschaltet sind. Bei den Busgeräten 17 handelt es sich vorzugsweise um weitere Ein-/Ausgabegeräte, insbesondere Aktoren und/oder Sensoren, die im Feldbus 5 als Slaves betrieben werden.

Optional können - sofern es der Feldbus-Standard des jeweils untergeordneten Feldbusses 3-5 zulässt - zumindest einige der Busgeräte 12,14 und 17 modular aufgebaut sein.

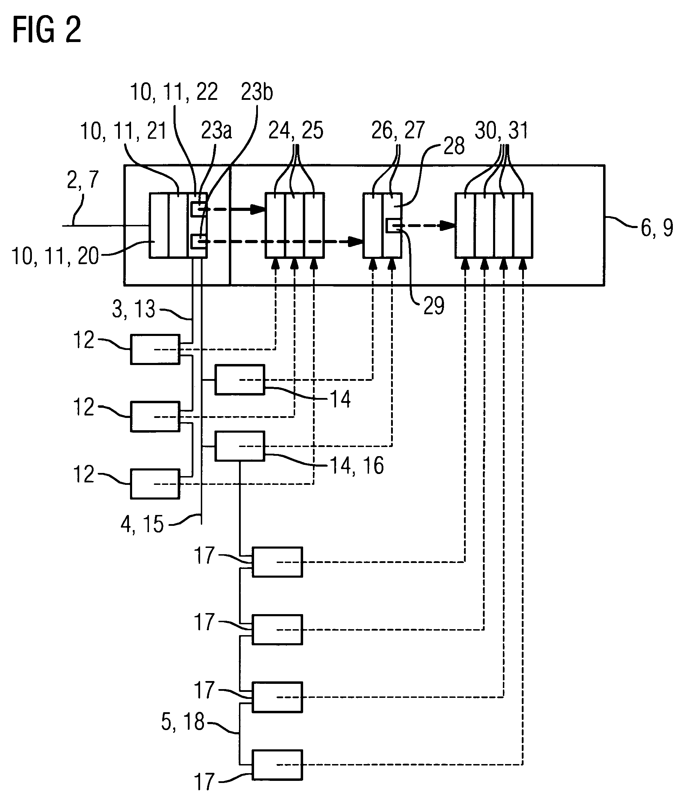

FIG 2 zeigt das FAP-Gerät 9 mit den daran unmittelbar oder mittelbar angeschlossenen Feldbussen 3-5 in größerem Detail.

Aus dieser Darstellung ist erkennbar, dass das FAP-Gerät 9 in beispielhafter Ausführung drei physische und mit Modulen 11 in Form von Steckkarten bestückte Steckplätze 10 aufweist. Bei diesen Modulen 11 handelt es sich beispielsweise um ein Schnittstellenmodul 20, das die Kommunikation des FAP-Geräts 9 innerhalb des Feldbusses 2 übernimmt, ein Ein-/Ausgabemodul (nachfolgend IO-Modul 21), das mindestens einen Sensor und/oder Aktor enthält, sowie ein FAP-Modul 22, an das die Feldbusse 3 und 4 angeschlossen sind.

Das FAP-Modul 22 umfasst wiederum zwei - auf einer gemeinsamen Steckkarte integrierte - FAP-(Unter-)Module 23a und 23b.

Das FAP-Modul 23a dient hierbei zur Integration des Feldbusses 3 in das Adress- und Kommunikationsschema des Feldbusses 2. Das FAP-Modul 23a definiert hierzu eine Anzahl von virtuellen Steckplätzen 24 (auch als Slot-Cluster bezeichnet), die aus dem Feldbus 2 separat adressierbar sind. Jedes Busgerät 12 des Feldbusses 3 wird hierbei durch das FAP-Modul 23a in ein virtuelles Modul 25 des Feldbusses 2 abgebildet, wobei jedes virtuelle Modul 25 einem der virtuellen Steckplätze 24 zugeordnet wird. Zu jedem Busgerät 12 des Feldbusses 3 wird im FAP-Modul 23a mit anderen Worten softwaretechnisch ein virtuelles Element hinterlegt, das im Adress- und Kommunikationsschema des Feldbusses 2 derart behandelt wird als wäre das betreffende Busgerät 12 ein physisches Modul des Feldbusses 2.

Dies hat zur Folge, dass einerseits die von dem Busgerät 12 an den Feldbus 3 ausgegebenen Daten über das FAP-Modul 23a und das zugehörige virtuelle Modul 25 in den Feldbus 2 eingespeist werden, und dass andererseits für das Busgerät 12 bestimmte Daten und Befehle aus dem Feldbus 2 über das virtuelle Modul 25, das FAP-Modul 23a und den Feldbus 3 an das Busgerät 12 geleitet werden.

Über das virtuelle Modul 25 ist das zugehörige Busgerät 12 des Feldbusses 3 mithin von dem Steuergerät 8 aus genauso ansprechbar wie Module eines der physischen Busgeräte 6. Die Übersetzung zwischen dem Adress- und Kommunikationsschema des Feldbusses 2 und dem - regelmäßig abweichenden - Adress- und Kommunikationsschema des Feldbusses 3 wird hierbei von dem FAP-Modul 23a oder einer anderen Komponente des modularen FAP-Geräts 9 übernommen.

In gleicher Weise vermittelt das FAP-Modul 23b den Daten- und Kontrollfluss zwischen dem Feldbus 2 und dem Feldbus 4, indem es eine Anzahl weiterer virtueller Steckplätze 26 definiert und die Busgeräte 14 des Feldbusses 4 in - diesen virtuellen Steckplätzen 26 zugeordnete - virtuelle Module 27 des Feldbusses 2 abbildet.

Das Verbindungsgerät 16, über das der Feldbus 5 mit dem Feldbus 4 verbunden ist, wird dabei durch das FAP-Modul 23b in ein virtuelles FAP-Modul 28 des Feldbusses 2 abgebildet.

Das virtuelle FAP-Modul 28 ist eine rein softwaretechnische Nachbildung des physischen FAP-Moduls 22 und weist eine dem letzten entsprechende Funktionalität auf. Insbesondere umfasst das virtuelle FAP-Modul 28 ein FAP-(Unter-)Modul 29 auf, das in gleicher Weise wie die FAP-(Unter-)Module 23a und 23b den Daten- und Kontrollfluss zwischen dem Feldbus 2 und dem Feldbus 5 vermittelt.

Hierzu definiert das FAP-Modul 29 in der vorstehend beschriebenen Weise eine Anzahl weiterer virtueller Steckplätze 30, bildet die Busgeräte 17 des Feldbusses 5 in virtuelle Module 31 des Feldbusses 2 ab und weist jeweils eines der virtuellen Module 31 einem der virtuellen Steckplätze 30 zu.

Als Ergebnis dieses Linearisierungsprozesses sind alle Busgeräte 12, 14 und 17 der untergeordneten Feldbusse 3, 4 und 5 als virtuelle Module 25 bzw. 27 bzw. 31 des Feldbusses 2 abgebildet. Die Busgeräte 12, 14 und 17 der untergeordneten Feldbusse 3, 4 und 5 sind somit über die zugeordneten virtuellen Module 25 bzw. 27 bzw. 31 im Adress- und Kommunikationsschema des Feldbusses 2 sichtbar und können aus diesem ohne Rücksicht auf das - gegebenenfalls abweichende - Adress- und Kommunikationsschema der Feldbusse 3, 4 und 5 separat adressiert und angesprochen werden.

Das FAP-Modul 22 ist hierbei zur Linearisierung beliebig tief kaskadierter Bussysteme eingerichtet. Es bildet somit ein Verbindungsgerät, über das ein - gegebenenfalls vorhandener - Feldbus n-ter Ordnung (n= 4,5,6,...) mit dem nächst-übergeordneten Feldbus verbunden ist, als virtuelles FAP-Modul des Feldbusses 2 ab. Durch ein FAP-Untermodul dieses virtuellen FAP-Moduls wird wiederum eine Anzahl von virtuellen Steckplätzen definiert. Die Busgeräte des Feldbusses n-ter Ordnung werden dabei durch dieses FAP-Untermodul in virtuelle Module des Feldbusses 2 abgebildet, die jeweils einem virtuellen Steckplatz zugeordnet werden.

Das FAP-Modul 22 ist weiterhin zur Linearisierung modularer Busgeräte von untergeordneten Feldbussen eingerichtet, indem es die Module jedes modularen Busgeräts in entsprechende Untermodule des zugehörigen virtuellen Moduls des Feldbusses 2 abbildet.

Die Bildung der virtuellen Steckplätze 24,26 und 30 und der virtuellen Module 25, 27 und 31 erfolgt im Übrigen insbesondere nach den Regeln, die in der Richtlinie (Guideline) "Fieldbus Integration in PROFINET IO", Version 2.0 (Mai 3031), Nr.: 7.012, PROFIBUS Nutzerorganisation e.V., Karlsruhe (Deutschland) beschrieben sind.

Der Gegenstand der Erfindung ist allerdings nicht auf das vorstehend beschriebene Ausführungsbeispiel beschränkt. Vielmehr können weitere Ausführungsformen der Erfindung von dem Fachmann aus den Ansprüchen und der vorstehenden Beschreibung abgeleitet werden.

## Patentansprüche

1. Verfahren zur Projektion eines kaskadierten Feldbus-Systems (1)
- mit einem ersten Feldbus (2), der eine Mehrzahl von ersten Busgeräten (6) umfasst,
- mit einem dem ersten Feldbus (2) untergeordneten zweiten Feldbus (4), der eine Mehrzahl von zweiten Busgeräten (9,14) umfasst, und
- mit einem dem zweiten Feldbus (4) untergeordneten dritten Feldbus (5), der eine Mehrzahl von dritten Busgeräten (16,17) umfasst,
wobei der zweite Feldbus (4) über ein Feldbuszugangsknotengerät (9) an den ersten Feldbus (2) angebunden wird, so dass Busgeräte (14) des zweiten Feldbusses (4) als virtuelle Module (27) des ersten Feldbusses (2) abgebildet werden, wobei ein Verbindungsgerät (16), über das der dritte Feldbus (5) an den zweiten Feldbus (4) angeschlossen wird, als virtuelles Feldbuszugangsknotenmodul (28) des ersten Feldbusses (2) abgebildet wird, und ein FAP-Untermodul (29) des virtuellen Feldbuszugangsknotenmoduls (28) eine Anzahl an virtuellen Steckplätzen definiert, so dass die übrigen Busgeräte (17) des dritten Feldbusses (5) als virtuelle Module (31) in virtuellen Steckplätzen (31) des ersten Feldbusses (2) abgebildet werden, und das FAP-Untermodul (29) jeweils einem virtuellen Modul (31) einen virtuellen Steckplatz (30) zuweist.

2. Verfahren nach Anspruch 1,
wobei der erste Feldbus (2) auf einem Ethernet-Standard beruht.

3. Verfahren nach Anspruch 1 oder 2,
wobei der zweite Feldbus (4) und/oder der dritte Feldbus (5) nicht auf einem Ethernet-Standard beruhen.

4. Verfahren nach einem der Ansprüche 1 bis 3,
wobei dem dritten Feldbus (5) wiederum unmittelbar oder mittelbar ein weiterer Feldbus untergeordnet wird, wobei ein Verbindungsgerät, über das der weitere Feldbus unmittelbar oder mittelbar an den dritten Feldbus (5) angeschlossen wird, als virtuelles Feldbuszugangsknotenmodul des ersten Feldbusses (2) abgebildet wird, so dass die übrigen Busgeräte des weiteren Feldbusses als virtuelle Module des ersten Feldbusses (2) abgebildet werden.

5. Kaskadiertes Feldbussystem (1)
- mit einem ersten Feldbus (2), der eine Mehrzahl von ersten Busgeräten (6) umfasst,
- mit einem dem ersten Feldbus (2) untergeordneten zweiten Feldbus (4), der eine Mehrzahl von zweiten Busgeräten (9,14) umfasst, und
- mit einem dem zweiten Feldbus (4) untergeordneten dritten Feldbus (5), der eine Mehrzahl von dritten Busgeräten (16,17) umfasst,
wobei der zweite Feldbus (4) über ein Feldbuszugangsknotengerät (9) an den ersten Feldbus (2) angebunden ist, so dass Busgeräte (14) des zweiten Feldbusses (4) als virtuelle Module (27) des ersten Feldbusses (2) abgebildet sind,
wobei ein Verbindungsgerät (16), über das der dritte Feldbus (5) an den zweiten Feldbus (4) angeschlossen ist, als virtuelles Feldbuszugangsknotenmodul (28) des ersten Feldbusses (2) abgebildet ist, und durch ein FAP-Modul (29) des virtuellen Feldbuszugangsknotenmoduls (28) eine Anzahl an virtuellen Steckplätzen definiert ist, so dass die übrigen Busgeräte (17) des dritten Feldbusses (5) als virtuelle Module (31) in virtuellen Steckplätzen (30) des ersten Feldbusses (2) abgebildet sind, und jeweils einem virtuellen Modul (31) ein virtueller Steckplatz (30) durch das FAP-Untermodul (29) zugewiesen ist.

6. Feldbussystem (1) nach Anspruch 5,
wobei der erste Feldbus (2) auf einem Ethernet-Standard beruht.

7. Feldbussystem (1) nach Anspruch 5 oder 6,
wobei der zweite Feldbus (4) und/oder der dritte Feldbus (5) nicht auf einem Ethernet-Standard beruhen.

8. Feldbussystem (1) nach einem der Ansprüche 5 bis 7, wobei dem dritten Feldbus (5) wiederum unmittelbar oder mittelbar ein weiterer Feldbus untergeordnet ist, wobei ein Verbindungsgerät, über das der weitere Feldbus unmittelbar oder mittelbar an den dritten Feldbus (5) angeschlossen ist, als virtuelles Feldbuszugangsknotenmodul des ersten Feldbusses (2) abgebildet ist, so dass die übrigen Module des weiteren Feldbusses als virtuelle Module des ersten Feldbusses (2) abgebildet sind.

9. Feldbusmodul (22), insbesondere Feldbuszugangsknotenmodul, zum Anschluss eines untergeordneten zweiten Feldbusses (4) an einen übergeordneten ersten Feldbus (2), wobei das Feldbusmodul (22) dazu eingerichtet ist, Busgeräte (14) des zweiten Feldbusses (4) als virtuelle Module (27) des ersten Feldbusses (2) abzubilden, und wobei das Feldbusmodul (22) zusätzlich dazu eingerichtet ist, ein Verbindungsgerät (16), über das ein dritter Feldbus (5) an den zweiten Feldbus (4) anschließbar ist, als virtuelles Feldbuszugangsknotenmodul (28) des ersten Feldbusses (2) abzubilden und die übrigen Busgeräte (17) des dritten Feldbusses (5) als virtuelle Module (31) des ersten Feldbusses (2) abzubilden, wobei durch ein FAP-Untermodul (29) des virtuellen Feldbuszugangsknotenmoduls (28) jeweils einem virtuellen Modul (31) ein virtueller Steckplatz (30) zugewiesen ist.

## Claims

1. Method for the project planning of a cascaded fieldbus system (1)
- having a first fieldbus (2), which includes a plurality of first bus devices (6),
- having a second fieldbus (4) subordinate to the first fieldbus (2), which includes a plurality of second bus devices (9, 14), and
- having a third fieldbus (5) subordinate to the second fieldbus (4), which includes a plurality of third bus devices (16, 17),
wherein the second fieldbus (4) is connected to the first fieldbus (2) by way of a fieldbus access node device (9), so that bus devices (14) of the second fieldbus (4) are presented as virtual modules (27) of the first fieldbus (2), wherein a connecting device (16), by way of which the third fieldbus (5) is connected to the second fieldbus (4), is presented as a virtual fieldbus access node module (28) of the first fieldbus (2), and a FAP submodule (29) of the virtual fieldbus access node mode (28) defines a number of virtual slots so that the remaining bus devices (17) of the third fieldbus (5) are presented as virtual modules (31) in virtual slots (31) of the first fieldbus (2) and the FAP submodule (29) assigns a virtual slot (30) to a virtual module (31) in each instance.

2. Method according to claim 1,
wherein the first fieldbus (2) is based on an Ethernet standard.

3. Method according to claim 1 or 2, wherein the second fieldbus (4) and/or the third fieldbus (5) is/are not based on an Ethernet standard.

4. Method according to one of claims 1 to 3,
wherein a further fieldbus is directly or indirectly subordinate to the third fieldbus (5), wherein a connecting device, by way of which the further fieldbus is directly or indirectly connected to the third fieldbus (5), is presented as a virtual fieldbus access node module of the first fieldbus (2) so that the remaining bus devices of the further fieldbus are presented as virtual modules of the first fieldbus (2).

5. Cascaded fieldbus system (1)
- having a first fieldbus (2), which includes a plurality of first bus devices (6),
- having a second fieldbus (4) subordinate to the first fieldbus (2), which includes a plurality of second bus devices (9, 14), and
- having a third fieldbus (5) subordinate to the second fieldbus (4), which includes a plurality of third bus devices (16, 17),
wherein the second fieldbus (4) is connected to the first fieldbus (2) via a fieldbus access node device (9), so that bus devices (14) of the second fieldbus (4) are presented as virtual modules (27) of the first fieldbus (2), wherein a connecting device (16), by way of which the third fieldbus (5) is connected to the second fieldbus (4), is presented as a virtual fieldbus access node module (28) of the first fieldbus (2), and a FAP submodule (29) of the virtual fieldbus access node mode (28) defines a number of virtual slots so that the remaining bus devices (17) of the third fieldbus (5) are presented as virtual modules (31) in virtual slots (31) of the first fieldbus (2) and the FAP submodule (29) assigns a virtual slot (30) to a virtual module (31) in each instance.

6. Fieldbus system (1) according to claim 5,
wherein the first fieldbus (2) is based on an Ethernet standard.

7. Fieldbus system (1) according to claim 5 or 6, wherein the second fieldbus (4) and/or the third fieldbus (5) are not based on an Ethernet standard.

8. Fieldbus system (1) according to one of claims 5 to 7, wherein a further fieldbus is in turn directly or indirectly subordinate to the third fieldbus (5), wherein a connecting device, by way of which the further fieldbus is directly or indirectly connected to the third fieldbus (5), is presented as a virtual fieldbus access node module of the first fieldbus (2), so that the remaining modules of the further fieldbus are presented as virtual modules of the first fieldbus (2).

9. Fieldbus module (22), in particular fieldbus access node module for connecting a subordinate second fieldbus (4) to a dominant first fieldbus (2), wherein the fieldbus module (22) is set up to present bus devices (14) of the second fieldbus (4) as virtual modules (27) of the first fieldbus (2) and wherein the fieldbus module (22) is also set up to present a connecting device (16), by way of which a third fieldbus (5) can be connected to the second fieldbus (4), as a virtual fieldbus access node module (28) of the first fieldbus (2) and to present the remaining bus devices (17) of the third fieldbus (5) as virtual modules (31) of the first fieldbus (2), wherein a virtual slot (30) is assigned to a virtual module (31) respectively by a FAP submodule (29) of the virtual fieldbus access node module (28) .

## Revendications

1. Procédé de conception d'un système ( 1 ) de bus de terrain en cascade
- ayant un premier bus ( 2 ) de terrain, qui comprend une multiplicité de premiers appareils ( 6 ) de terrain,
- ayant un deuxième bus ( 4 ) de terrain, qui est subordonné au premier bus ( 2 ) de terrain et qui comprend une multiplicité de deuxièmes appareils ( 9, 14 ) de terrain et
- ayant un troisième bus ( 5 ) de terrain, qui est subordonné au deuxième bus ( 4 ) de terrain et qui comprend une multiplicité de troisièmes appareils ( 16, 17 ) de terrain,
dans lequel on relie le deuxième bus ( 4 ) de terrain au premier bus (2) de terrain, par un appareil ( 9 ) à noeud d'accès de bus de terrain, de manière à représenter des appareils ( 14 ) de bus du deuxième bus ( 14 ) de terrain comme des modules ( 27 ) virtuels du premier bus (2) de terrain,
dans lequel un appareil ( 16 ) de liaison, par lequel le troisième bus ( 5 ) de terrain est raccordé au deuxième bus ( 4 ) de terrain, est représenté comme module ( 28 ) virtuel de noeud d'accès du premier bus ( 2 ) de terrain et un sous-module ( 29 ) FAP du module ( 28 ) de noeud d'accès du bus de terrain définit un certain nombre de connecteurs d'extension virtuels, de manière à ce que les autres appareils ( 17 ) de bus du troisième bus ( 5 ) de terrain soient représentés comme modules ( 31 ) virtuels dans des connecteurs ( 31 ) d'extension virtuels du premier bus (2) de terrain et le sous-module ( 29 ) FAP affecte un connecteur ( 30 ) d'extension virtuels respectivement à un module ( 31 ) virtuel.

2. Procédé suivant la revendication 1,
dans lequel le premier bus (2) de terrain repose sur une norme éthernet.

3. Procédé suivant la revendication 1 ou 2,
dans lequel le deuxième bus ( 4 ) de terrain et/ou le troisième bus ( 5 ) de terrain ne repose pas sur une norme éthernet.

4. Procédé suivant l'une des revendications 1 à 3,
dans lequel il est subordonné au troisième bus ( 5 ) de terrain à nouveau directement ou indirectement un autre bus de terrain, un appareil de liaison par lequel l'autre bus de terrain est raccordé directement ou indirectement au troisième bus ( 5 ) de terrain représentant un module de noeud d'accès du premier bus ( 2 ) de terrain, de manière à ce que les autres appareils de bus de l'autre bus de terrain soient représentés comme modules virtuels du premier bus ( 2 ) de terrain.

5. Système ( 1) de bus de terrain à cascade
- ayant un premier bus (2) de terrain, qui comprend une multiplicité de premiers appareils ( 6 ) de terrain,
- ayant un deuxième bus ( 4 ) de terrain, qui est subordonné au premier bus (2) de terrain et qui comprend une multiplicité de deuxièmes appareils ( 9, 14 ) de terrain et
- ayant un troisième bus ( 5 ) de terrain, qui est subordonné au deuxième bus ( 4 ) de terrain et qui comprend une multiplicité de troisièmes appareils ( 16, 17 ) de terrain,
dans lequel on relie le deuxième bus ( 4 ) de terrain au premier bus (2) de terrain par un appareil ( 9 ) à noeud d'accès de bus de terrain, de manière à représenter des appareils ( 14 ) de bus du deuxième bus ( 14 ) de terrain comme des modules ( 27 ) virtuels du premier bus (2) de terrain,
dans lequel un appareil ( 16 ) de liaison, par lequel le troisième bus ( 5 ) de terrain est raccordé au deuxième bus ( 4 ) de terrain est représenté comme module ( 28 ) de noeud d'accès du premier bus ( 2 ) de terrain et il est défini par un module ( 29 ) FAP du module ( 28 ) de noeud d'accès du bus de terrain un certain nombre de connecteurs d'extension virtuels de sorte que les autres bus ( 17 ) de terrain du troisième bus ( 5 ) de terrain soient représentés comme modules ( 31 ) virtuels en des connecteurs ( 30 ) d'extension virtuels du premier bus (2) de terrain et un connecteur ( 30 ) d'extension virtuel est affecté à respectivement un module ( 31 ) virtuel par le sous-module ( 29 ) FAP.

6. Système ( 1) de bus de terrain suivant la revendication 5,
dans lequel le premier bus (2) de terrain repose sur une norme éthernet.

7. Système ( 1) de bus de terrain suivant la revendication 5 ou 6,
dans lequel le deuxième bus ( 4 ) de terrain et/ou le troisième bus ( 5 ) de terrain ne repose pas sur une norme éthernet.

8. Système ( 1 ) de bus de terrain suivant l'une des revendications 5 à 7,
dans lequel il est subordonné au troisième bus ( 5 ) de terrain à nouveau directement ou indirectement un autre bus de terrain, un appareil de liaison, par lequel l'autre bus de terrain est raccordé directement ou indirectement au troisième bus ( 5 ) de terrain, représentant un module de noeud d'accès du premier bus (2) de terrain, de manière à ce que les autres appareils de bus de l'autre bus de terrain soient représentés comme modules virtuels du premier bus (2) de terrain.

9. Module ( 22 ) de bus de terrain, notamment module de noeud d'accès de bus de terrain, pour le raccordement d'un deuxième bus ( 4 ) de terrain subordonné à un premier bus (2) de terrain supérieur hiérarchiquement, le module ( 22 ) de bus de terrain étant conçu pour que des appareils ( 14 ) de bus du deuxième bus ( 4 ) de terrain représentent un module ( 27 ) virtuel du premier bus de terrain et le module ( 22 ) de bus de terrain étant conçu en outre pour qu'un appareil ( 16 ) de liaison, par lequel un troisième bus ( 5 ) de terrain peut être raccordé au deuxième bus ( 4 ) de terrain, représente un module ( 28 ) de noeud d'accès virtuel du premier bus ( 2 ) de terrain et les autres appareils ( 17 ) de bus du troisième bus ( 5 ) de terrain représentent un module ( 31 ) virtuel du premier bus ( 2 ) de terrain, dans lequel, par un sous-module ( 29 ) FAP du module ( 28 ) de noeud d'accès virtuel du bus de terrain, un connecteur ( 30 ) d'extension virtuel est affecté respectivement à un module ( 31 ) virtuel.
